# FASCICULE DE BREVET EUROPEEN

(11) **EP 0 607 067 B1**
(45) Date de publication et mention de la délivrance du brevet: **09.04.1997**
(21) Numéro de dépôt: 94400033.0
(22) Date de dépôt: 06.01.1994
(51) Int. Cl.: H01R 13/52

(54) **Connexion d'un vitrage à une source d'alimentation électrique**
Verbindung einer Glasscheibe an eine elektrische Stromversorgung
Connexion of a window to a power supply

(30) Priorité: 12.01.1993 FR 9300196
(43) Date de publication de la demande: 20.07.1994
(73) Titulaire: SAINT-GOBAIN VITRAGE, 92400 Courbevoie (FR)
(72) Inventeur: Leclercq, Philippe, F-91700 Sainte Genevieve des Bois (FR)
(74) Mandataire: Le Vaguerèse, Sylvain Jacques

(56) Documents cités:
- EP-A- 0 427 615
- EP-A- 0 427 619
- DE-U- 9 014 223
- GB-A- 2 222 319
- US-A- 4 887 979

## Description

L'invention concerne un vitrage muni d'un élément de connexion afin de le relier à une source de signaux électriques. L'invention concerne également l'élément de connexion et la technique s'y rapportant.

Il existe plusieurs types de vitrages, monolithiques ou feuilletés, nécessitant une liaison électrique. Il s'agit par exemple des vitrages chauffants, des vitrages à propriétés optiques électrocommandés, tels des vitrages à cristaux liquides, électrochromes... ou des vitrages possédant une fonction nécessitant cette alimentation (capteurs, éclairage, antenne, ...).

Quel que soit ce type de vitrage la liaison électrique est, en général, assurée par une bande collectrice reliée électriquement à la fois aux éléments nécessitant cette liaison et à une source extérieure de signaux électriques. Cette bande collectrice est, soit amenée directement hors du vitrage en vue de sa connexion à un réseau extérieur, soit connectée à de minces pattes métalliques elles-mêmes amenées latéralement hors du vitrage.

La connexion électrique est assurée usuellement par une soudure au ras du vitrage. Pour protéger cette soudure, une bande isolante est généralement enroulée autour de cette dernière.

Les réalisations connues des connexions de câbles présentent divers inconvénients. D'une part, la connexion électrique se situe au-delà de la surface délimitant le pourtour extérieur du vitrage de sorte que, lors des manipulations et du transport, il est soumis à des risques d'endommagement. D'autre part, la fiabilité, l'étanchéité et la solidité de ce type de connexion laissent dans l'ensemble à désirer.

Il a été proposé dans le document EP 490 723 de loger la connexion dans un creux pratiqué à cet effet dans une feuille de verre, constituant un des éléments du vitrage feuilleté. La connexion est alors assurée par une virole. Cette solution, quoique satisfaisante, nécessite un usinage particulier de la feuille de verre.

L'invention a pour but de procurer un vitrage dont la connexion électrique est facile à mettre en oeuvre et présente, notamment, une solidité et une étanchéité liorées.

L'invention concerne un vitrage monolithique ou feuilleté nécessitant une liaison électrique muni d'un élément de connexion comportant deux parties : une partie fixée au vitrage, constituée elle-même d'une patte assurant sa fixation et d'une cosse s'étendant au-delà de la périphérie du vitrage. La deuxième partie comporte une cosse complémentaire à celle fixée au vitrage, enrobée au moins partiellement par un corps profilé en forme de U en un matériau isolant électrique qui, en position connectée, chevauche les deux faces du vitrage et forme un réservoir à colle entre sa base et le chant du vitrage.

Cette disposition permet, par la simple introduction d'une cosse mâle dans une cosse femelle, de connecter le vitrage à une source d'alimentation électrique par un mouvement de translation, chaque aile du U venant reposer sur chacune des faces du vitrage. La connexion est ainsi assurée de façon simple et fiable.

Un autre avantage de l'invention est la protection de la cosse par le corps profilé en U des sollicitations extérieures et de l'atmosphère environnante. Les risques d'endommagement et de corrosion sont, par exemple, réduits, voire éliminés.

Par ailleurs, on obtient selon l'invention un élément de connexion solidement relié au vitrage par la présence, outre des deux cosses enfichées l'une dans l'autre, de chacune des ailes du U reposant respectivement sur chacune des faces du vitrage.

Le vitrage concerné par l'invention est monolithique ou feuilleté. Selon une variante préférée de l'invention, le vitrage est feuilleté. Il peut s'agir alors avantageusement d'un vitrage feuilleté utilisé dans les véhicules, tels que pare-brise, lunettes arrières, etc...

La partie de l'élément de connexion fixée au vitrage comporte une patte, assurant sa fixation, et une cosse. La fixation est obtenue par collage, soudure, de la patte sur le vitrage, ou tout autre moyen approprié. Avantageusement, lorsque le vitrage est feuilleté, la patte est noyée dans la matière plastique constituant l'intercalaire. Cette patte comporte, de préférence, des évidements améliorant ainsi la fixation de la cosse, fixation obtenue par l'apport conjoint de chaleur et de pression lors de l'assemblage du vitrage feuilleté.

Afin de faciliter le positionnement de la cosse sur le vitrage ainsi que son enfichage, la partie fixée au vitrage comporte avantageusement un ergot de positionnement prenant appui sur le chant du vitrage.

La cosse fixée au vitrage est, de préférence, la cosse mâle, la cosse femelle étant située dans le profil en U.

Les caractéristiques dimensionnelles du corps profilé sont adaptées au vitrage introduit dans la cavité formée par le U. Ces dimensions sont calculées, de préférence, pour épouser parfaitement la forme du vitrage afin d'améliorer l'étanchéité et la résistance mécanique de la connexion. De ce fait, le matériau constituant le profil peut être élastique ou thermorétractable tout en présentant une certaine rigidité. Il s'agit, par exemple, d'une matière thermoplastique ou thermodurcissable. On utilise, par exemple, un polyamide. Cette matière plastique peut être renforcée par toute matière appropriée.

Les deux ailes du U sont distantes d'une longueur correspondant à l'épaisseur du vitrage, ou légèrement supérieure. Elle est comprise, par exemple, entre 2 et 7 mm. Si le vitrage est feuilleté, elle est avantageusement comprise entre 4 et 7 mm.

Les dimensions des branches constituant le U sont suffisamment importantes pour assurer un bon contact avec les faces du vitrage sans toutefois excéder la largeur impartie pour limiter l'encombrement sur les faces du vitrage. En effet d'autres éléments fonctionnels, tel un cordon de colle..., peuvent être prévus à proximité de ladite connexion. Leur surface est, par exemple, comprise entre 0,4 et 3 cm². Les dimensions des deux ailes formant le U ne sont pas forcément identiques. Une des ailes peut, par exemple, présenter une longueur et/ou une épaisseur supérieure(s) aux dimensions de l'autre aile. L'une des ailes, ou les deux, peut également comporter des nervures de renforcement.

L'épaisseur des ailes du corps profilé en U est, par exemple, comprise entre 0,5 et 3 mm.

Selon une variante préférée de l'invention, la base du U est arrondie. Ainsi, lorsque le corps profilé est avantageusement collé au vitrage, cette forme arrondie constitue un réservoir à colle. Cet excès de colle assure l'adhésion et améliore l'étanchéité de la connexion.

La colle utilisée est, de préférence, thermofusible. Ainsi, au moment de l'enfichage, la colle en fluant améliore l'étanchéité de la connexion en colmatant en quelque sorte tous les jeux susceptibles d'exister. Avantageusement, des lèvres situées à proximité de la cosse femelle sont prévues pour limiter l'entrée de la colle dans ladite cosse.

D'autres caractéristiques et avantages de l'invention peuvent être obtenus dans la description suivante, selon une variante préférée de l'invention, en référence aux dessins annexés :
· la figure 1 représente une vue partielle, en perspective, d'un vitrage chauffant selon une variante préférée de l'invention,
· la figure 2 représente, en détail, la partie de l'élément de connexion fixée au vitrage, en perspective,
· la figure 3 représente, en détail, la partie de l'élément de connexion non fixée au vitrage, en perspective.

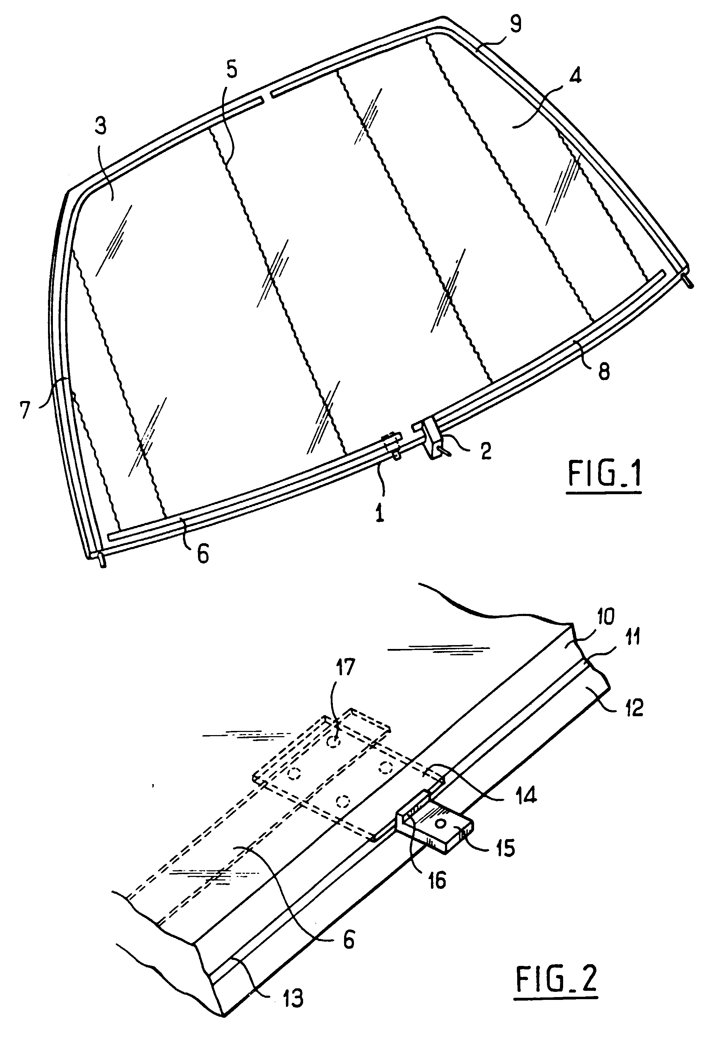

Le vitrage selon la figure 1 est muni de deux éléments de connexion 1 et 2 selon l'invention. Dans cet exemple, il s'agit d'un vitrage feuilleté comportant deux réseaux 3 et 4 de fils fins de résistance électrique de chauffage 5, montés dans l'intercalaire thermoplastique. Chaque fil chauffant 5 est relié électriquement à deux bandes collectrices, respectivement 6, 7, 8, 9, le réseau 3 comportant les bandes 6 et 7, le réseau 4 les bandes 8 et 9. Les bandes collectrices sont, par exemple, constituées de bandes de clinquant de cuivre de 0,05 mm d'épaisseur et de 5 mm de largeur, recouvertes de brasure à l'étain à bas point de fusion. Bien entendu, elles peuvent aussi présenter une autre largeur et, le cas échéant, une autre épaisseur en fonction de la puissance électrique du vitrage chauffant. La connexion selon l'invention est utilisée ici pour relier les bandes collectrices 6 et 8 à une source d'alimentation électrique.

L'élément de connexion 1 est représenté non connecté, alors que l'élément 2 est connecté à une source d'alimentation électrique.

La figure 2 représente, plus en détail, l'élément 1. Cet élément est monté, dans cet exemple, entre la feuille de verre 10 et l'intercalaire 11, plus précisément entre la face 13 de la feuille de verre 10 et l'intercalaire 11. Il peut également être monté entre la feuille de verre 12 et l'intercalaire 11 en fonction de l'emplacement du réseau chauffant sur l'une ou l'autre des faces de l'intercalaire 11. Il comporte une patte 14 fixée au vitrage lors de son assemblage et une cosse 15, représentée ici comme une cosse mâle. Cette dernière s'étend au-delà de la périphérie du vitrage. Un ergot de positionnement 16 est prévu pour faciliter le bon positionnement de l'élément de connexion sur le vitrage à l'endroit et selon la direction voulus. La patte 14 peut également comporter des évidements 17 facilitant sa fixation. La patte 14 et la cosse 15 sont, de préférence, obtenues à partir d'une même pièce avantageusement étamée.

La patte 14 est en contact électrique avec la bande collectrice 6, comme représenté sur la figure 1, alors que la cosse 15 s'étend au-delà du vitrage afin de pouvoir être enfichée dans la cosse complémentaire.

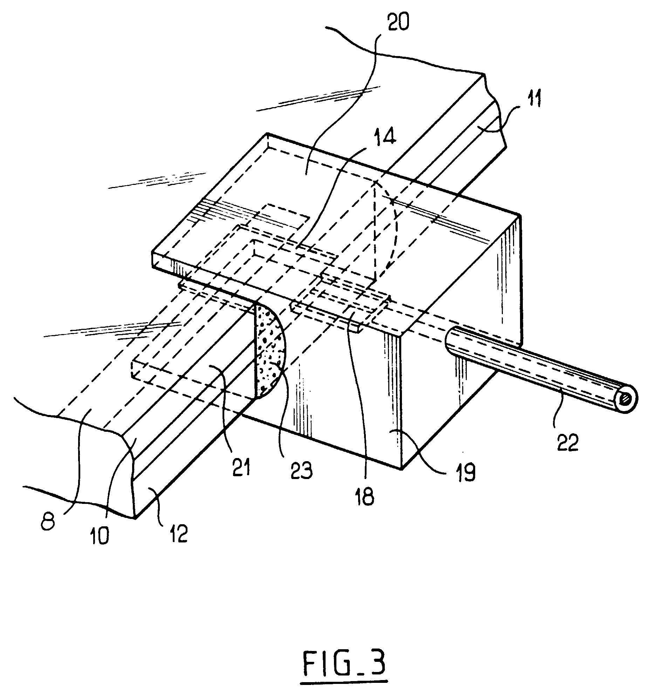

La figure 3 représente, plus en détail, l'élément de connexion 2.

La partie mâle 15, non représentée, de l'élément de connexion, identique à celle représentée en figure 2, est enfichée dans la cosse femelle 18 située dans un corps profilé 19 en forme de U, plus précisément dans la base de ce U. Seule l'ouverture de la cosse femelle n'est pas enrobée par le corps profilé de manière à permettre la connexion tout en la protégeant de toute sollicitation extérieure. Une fois la connexion faite, les cosses sont entourées de toutes parts, soit par le profil en U, soit par le vitrage présent à l'intérieur de la cavité formée par le U. Les ailes 20 et 21 du corps profilé 19 reposant sur chacune des faces du vitrage, la résistance mécanique de la connexion en est d'autant améliorée sans risquer d'endommager le vitrage. Ce dernier est solidement relié à la source d'alimentation électrique. Par ailleurs, la connexion ne se matérialise que par la présence d'une simple surépaisseur chevauchant le vitrage, surépaisseur en un matériau suffisamment rigide pour être lui-même non endommageable, notamment lors des manipulations et du transport. La connexion selon l'invention est ainsi parfaitement protégée, à la fois de l'atmosphère environnante, des chocs ou d'une sollicitation sur l'un quelconque des éléments, vitrage ou câble électrique 22, risquant de désolidariser cet assemblage.

Avantageusement la technique de connexion comporte, préalablement au mouvement de translation pour enficher les cosses l'une dans l'autre, une enduction préalable de colle des parois internes du U et/ou des faces du vitrage en contact avec le corps profilé 19. Lorsque la base du corps 19 est arrondie, comme représenté sur la figure 3, il se forme alors une sorte de réservoir à colle 23 améliorant l'étanchéité de la connexion. Des lèvres, non représentées, peuvent être prévues à proximité de l'ouverture de la cosse 18 afin d'y limiter l'entrée de la colle. Cette colle est, de préférence, une colle dite "hot melt" fluide à 180°C. Le fluage de l'excès de colle améliore l'étanchéité en remplissant toute la cavité du U. Par ailleurs, l'excès de colle est facilement éliminé. La colle peut être également injectée dans la base du U après la connexion électrique des deux cosses.

Elle peut être appliquée par un quelconque moyen. Il s'agit, de préférence, d'une injection volumétrique.

Les figures ci-dessus se rapportent à un vitrage feuilleté chauffant. Il est bien entendu que l'invention concerne tout type de vitrage nécessitant une alimentation électrique.

Il est également possible de fixer la cosse femelle au vitrage alors que la cosse mâle, non fixée au vitrage, est enrobée au moins partiellement par un corps profilé en forme de U.

## Revendications

1. Vitrage monolithique ou feuilleté muni d'un élément de connexion, caractérisé en ce que l'élément de connexion comporte deux parties, une partie fixée au vitrage, constituée d'une patte (14) assurant sa fixation et d'une cosse (15) s'étendant au-delà de la périphérie du vitrage, la deuxième partie comportant la cosse complémentaire (18) à celle fixée au vitrage, enrobée au moins partiellement par un corps profilé en forme de U (19) en un matériau isolant électrique qui, en position connectée, chevauche les deux faces du vitrage et forme un réservoir à colle (23) entre sa base et le chant du vitrage.

2. Vitrage selon la revendication 1, caractérisé en ce que la base du U est arrondie, constituant le réservoir à colle.

3. Vitrage selon la revendication 1, caractérisé en ce que la longueur et/ou l'épaisseur d'une aile constituant le U du corps profilé est supérieure à celle de la deuxième aile constituant le U.

4. Vitrage selon la revendication 1, caractérisé en ce que la partie fixée au vitrage possède un ergot de positionnement (16) prenant appui sur le chant du vitrage.

5. Vitrage selon la revendication 1, caractérisé en ce que le vitrage est feuilleté.

6. Vitrage selon la revendication 5, caractérisé en ce que la patte d'une partie de l'élément de connexion selon l'invention est noyée dans la matière plastique constituant un intercalaire (11) et la cosse, destinée à être enfichée, déborde du chant du vitrage.

7. Vitrage selon la revendication 6, caractérisé en ce que la patte comporte des évidements (17).

8. Vitrage selon la revendication 1, caractérisé en ce que la cosse fixée sur le vitrage est la cosse mâle, et que la cosse enrobée partiellement par le profil en U est la cosse femelle.

9. Vitrage selon la revendication 8, caractérisé en ce que des lèvres sont prévues à proximité de la cosse femelle.

10. Vitrage nécessitant une alimentation électrique, comportant au moins deux bandes collectrices (6, 7), elles-mêmes connectées électriquement à un élément de connexion (1, 2), caractérisé en ce que l'élément de connexion comporte deux parties, une partie fixée au vitrage et en contact électrique avec la bande collectrice (6, 7), constituée d'une patte (14) assurant sa fixation et d'une cosse (15) s'étendant au-delà de la périphérie du vitrage, la deuxième partie comportant une cosse complémentaire à celle fixée au vitrage (18), enrobée au moins partiellement par un corps profilé en forme de U (19) en un matériau isolant électrique qui, en position connectée, chevauche les deux faces du vitrage et forme un réservoir à colle entre sa base et le chant du vitrage.

11. Elément de connexion comportant une cosse (18) enrobée au moins partiellement par un corps profilé en forme de U (19), destiné à connecter une source de signaux électriques à un vitrage selon l'une des revendications précédentes.

12. Technique de connexion d'un vitrage à un conducteur électrique utilisant un élément de connexion selon la revendication 11, caractérisée en ce que les parois internes du corps profilé en forme de U et/ou les faces d'un vitrage destiné à être connecté à ladite source électrique sont enduites de colle, la connexion étant réalisée par un mouvement de translation de l'élément de connexion vers le vitrage ou vice-versa et étant assurée par la colle.

## Patentansprüche

1. Mit einem Anschlußelement versehene einschichtige oder Verbundverglasung, **dadurch gekennzeichnet, daß** das Anschlußelement zwei Teile umfaßt, einen in der Verglasung befestigten Teil, der aus einer seine Befestigung sichernden Lasche (14) und einem Schuh (15) gebildet ist, der sich ab dem Rand der Verglasung erstreckt, und einen zweiten Teil, der einen Schuh (18) enthält, welcher den an der Verglasung befestigten ergänzt und mindestens teilweise von einem U-förmigen Profilkörper (19) aus einem Elektroisoliermaterial umgeben ist, der in angeschlossener Position beide Seiten der Verglasung umschließt und zwischen seinem Boden und dem Rand der Verglasung ein Klebstoffreservoir (23) bildet.

2. Verglasung nach Anspruch 1, **dadurch gekennzeichnet, daß** der Boden des U rund ist und das Klebstoffreservoir bildet.

3. Verglasung nach Anspruch 1, **dadurch gekennzeichnet, daß** die Länge und/oder die Dicke eines Schenkels, der das U des Profilkörpers bildet, größer als die des zweiten Schenkels, der das U bildet, ist.

4. Verglasung nach Anspruch 1, **dadurch gekennzeichnet, daß** der in der Verglasung befestigte Teil eine Positionierkante (16) besitzt, die auf dem Rand der Verglasung aufliegt.

5. Verglasung nach Anspruch 1, **dadurch gekennzeichnet, daß** die Verglasung eine Verbundverglasung ist.

6. Verglasung nach Anspruch 5, **dadurch gekennzeichnet, daß** die Lasche eines Teils des erfindungsgemäßenn Anschlußelements in den eine Zwischenschicht (11) bildenden Kunststoff eingebettet ist und der Schuh, der zum Einstecken vorgesehen ist, vom Rand der Verglasung absteht.

7. Verglasung nach Anspruch 6, **dadurch gekennzeichnet, daß** die Lasche Aussparungen (17) enthält.

8. Verglasung nach Anspruch 1, **dadurch gekennzeichnet, daß** der an der Verglasung befestigte Schuh der Steckschuh und der teilweise von dem U-Profil umgebene Schuh der Aufnahmeschuh ist.

9. Verglasung nach Anspruch 8, **dadurch gekennzeichnet, daß** in der Nähe des Aufnahmeschuhs Ränder vorgesehen sind.

10. Verglasung, welche eine elektrische Stromversorgung erfordert, die mindestens zwei ihrerseits an ein Anschlußelement (1, 2) elektrisch angeschlossene Sauimelbänder (6, 7) enthält, **dadurch gekennzeichnet, daß** das Anschlußelement zwei Teile umfaßt, einen mit dem Sammelband (6, 7) im elektrischen Kontakt stehenden, in der Verglasung befestigten Teil, der aus einer seine Befestigung sichernden Lasche (14) und einem Schuh (15) besteht, der sich ab dem Rand der Verglasung erstreckt, und einen zweiten Teil, der einen Schuh (18) enthält, welcher den an der Verglasung befestigten ergänzt und mindestens teilweise von einem U-förmigen Profilkörper (19) aus einem Elektroisoliermaterial umgeben ist, der in angeschlossener Position beide Seiten der Verglasung umschließt und zwischen seinem Boden und dem Rand der Verglasung ein Klebstoffreservoir bildet.

11. Anschlußelement, das einen mindestens teilweise von einem U-förmigen Profilkörper (19) umgebenen Schuh (18) umfaßt und vorgesehen ist, eine Verglasung nach einem der vorhergehenden Ansprüche an eine elektrische Spannungsquelle anzuschließen.

12. Verfahren zum Anschließen einer Verglasung an einen elektrischen Leiter, in welchem ein Anschlußelement nach Anspruch 11 verwendet wird, **dadurch gekennzeichnet, daß** auf die Innenwände des U-förmigen Profilkörpers und/oder auf die Seiten einer Verglasung, welche an die elektrische Spannungsquelle angeschlossen werden soll, Klebstoff aufgetragen wird, wobei der Anschluß durch eine Längsbewegung des Anschlußelements zur Verglasung oder umgekehrt realisiert und durch den Klebstoff gesichert wird.

## Claims

1. Monolithic or laminated pane equipped with a connection element, characterized in that the connection element comprises two parts, a part fixed to the pane constituted of a lug (14) assuring its fixing and of a terminal (15) extending beyond the periphery of the pane, the second part comprising the complementary terminal (18) to that fixed to the pane, coated at least partly with a U-shaped profiled body (19) of an electrically insulating material which, in the connected position, rests on the two faces of the pane and forms a reservoir of adhesive (23) between its base and the edge face of the pane.

2. Pane according to claim 1, characterized in that the base of the U is rounded, constituting the adhesive reservoir.

3. Pane according to claim 1, characterized in that the length and/or the thickness of one flange forming the U of the profiled body is greater than that of the second flange forming the U.

4. Pane according to claim 1, characterized in that the part fixed to the pane possesses a positioning tab (16) bearing against the edge face of the pane.

5. Pane according to claim 1, characterized in that the pane is laminated.

6. Pane according to claim 5, characterized in that the lug of a part of the connection element according to this invention is embedded in the plastics material forming an intermediate sheet (11), and the terminal, intended to be pushed in, projects beyond the edge face of the pane.

7. Pane according to claim 6, characterized in that the lug comprises recesses (17).

8. Pane according to claim 1, characterized in that the terminal fixed to the pane is the male terminal, and that the terminal partly coated by the U-shaped profile is the female terminal.

9. Pane according to claim 8, characterized in that lips are provided in proximity to the female terminal.

10. Pane requiring an electrical supply, comprising at least two collector strips (6, 7), themselves connected electrically to a connection element (1, 2), characterized in that the connection element comprises two parts, a part fixed to the pane and in electrical contact with the collector strip (6, 7), formed of a lug (14) assuring its fixing, and of a terminal (15) extending beyond the periphery of the pane, the second part comprising a complementary terminal to that fixed to the pane (18), coated at least partly with a U-shaped profiled body (19) of an electrically insulating material which, in the connected position, rests on the two faces of the pane and forms a reservoir for adhesive between its base and the edge face of the pane.

11. Connection element comprising a terminal (18) coated at least partly in a U-shaped profiled body (19), intended for connecting a source of electrical signals to a pane according to one of the preceding claims.

12. Technique for connecting a pane to an electrical conductor using a connection element according to claim 11, characterized in that the internal walls of the U-shaped profiled body and/or the faces of a pane intended to be connected to said electrical source are coated with adhesive, the connection being formed by a translatory movement of the connection element towards the pane or vice versa and being assured by the adhesive.
